# EUROPEAN PATENT APPLICATION

(11) **EP 2 662 208 A1**
(43) Date of publication of application: **13.11.2013**
(21) Application number: 11854715.7
(22) Date of filing: 26.12.2011
(51) Int. Cl.: B32B 15/09, C08J 7/00

(54) **COPPER-CLAD LAMINATE AND METHOD FOR MANUFACTURING SAME**

(30) Priority: 05.01.2011 JP 2011000478
(71) Applicant: JX Nippon Mining & Metals Corporation, Tokyo 100-8164 (JP)
(72) Inventor: SAKAGUCHI Kazuhiko, Hitachi-city Ibaraki 317-0056 (JP); INAZUMI Hajime, Hitachi-city Ibaraki 317-0056 (JP); YACHI Hisakazu, Hitachi-city Ibaraki 317-0056 (JP)
(74) Representative: Liesegang, Eva
(86) International application number: PCT/JP2011/079996
(87) International publication number: WO 2012/093606

(57) **Abstract**

Provided is a copper-clad laminate comprising a metal conductor layer formed by dry plating and/or wet plating on a surface obtained by subjecting a surface of a liquid crystal polymer film to plasma treatment in an oxygen atmosphere or a nitrogen atmosphere at a gas pressure of 2.6 to 15 Pa. Further provided is a copper-clad laminate comprising a liquid crystal polymer film having a surface roughness after the plasma treatment of 0.15 µm or less in terms of arithmetic mean roughness Ra and 0.20 µm or less in terms of root-mean-square roughness Rq. Further provided is a method for manufacturing a copper-clad laminate, wherein a metal conductor layer is formed by dry plating and/or wet plating after subjecting a surface of a liquid crystal polymer film to plasma treatment in an oxygen atmosphere or a nitrogen atmosphere at a gas pressure of 2.6 to 15 Pa.

## Description

### TECHNICAL FIELD

The present invention relates to a copper-clad laminate having excellent high frequency characteristics and a method for manufacturing the copper-clad laminate.

### BACKGROUND ART

The physical properties, dielectric constant and dielectric tangent, which a liquid crystal polymer film as an insulating material possesses, are stable even in a high frequency range, and also the water absorption thereof is low. Hence, application of the liquid crystal polymer film to a high frequency circuit board or a circuit for high-speed transmission line has been being investigated.
However, the adhesion and affinity between a liquid crystal polymer and a metal conductor layer are low, and therefore the physical adhesion is enhanced through an anchor effect by increasing the surface roughness of copper foil, which is usually used as a metal conductor layer, or varying the grain shape in roughing treatment.

In a high frequency range, however, since the surface roughness decreases with an increase in frequency, an increase in roughness of the interface between a liquid crystal polymer and a metal conductor layer causes an increase in the involvement ratio of the surface roughness and an increase in the transmission loss, resulting in a problem that the essential performance of a liquid crystal polymer film with excellent high frequency characteristics is not sufficiently achieved.

In conventional technology, a thermoplastic liquid crystal polymer film is treated with gas-discharge plasma in the presence of an oxygen atom-containing compound in the form of gas for surface modification to give a molar ratio of oxygen atom to carbon atom at the surface to be 1.2 times or more that of the inside (Patent Document 1). In this case, the modification by oxygen introduction into the liquid crystal polymer film is indispensable requirement. In addition, the technology is plasma treatment in the presence of an oxygen-containing compound, referring to only the surface modification by oxygen. Any effect of surface modification by another gas is not described therein.

Patent Document 2 describes discharge plasma treatment of a thermoplastic liquid crystal polymer film under an atmosphere of an oxygen gas pressure of 0.6 to 2.5 Pa. Though this Document defines the roughness of a liquid crystal polymer film, and only describes the influence of an increase in the surface roughness on a metal seed layer so as to prevent uniform covering.

Patent Documents 1 and 2 describe findings of effects of oxygen gas plasma treatment for modifying the surface of a liquid crystal polymer film, and intend to modify the surface by gas plasma treatment including other gaseous species. Patent Documents 1 and 2 do not disclose at all about the subject of the present invention described below, in which the surface roughness does not vary before and after the treatment and essential excellent high frequency characteristics of the liquid crystal polymer film are maintained.

Patent Document 1: Japanese Patent Application Laid-Open No. 2001-49002
Patent Document 2: Japanese Patent Application Laid-Open No. 2005-297405

### SUMMARY OF INVENTION

### [Technical Problem]

The present invention provides a copper-clad laminate of a liquid crystal polymer having excellent high frequency characteristics by strengthening chemical adhesion through plasma treatment while the interface roughness between the liquid crystal polymer and the metal conductor layer being maintained to be substantially equal to the original film roughness.

### [Solution to Problem]

That is, the present invention provides:
1) A copper-clad laminate comprising a metal conductor layer formed by dry plating and/or wet plating on a surface obtained by subjecting a surface of a liquid crystal polymer film to plasma treatment in an oxygen atmosphere or a nitrogen atmosphere at a gas pressure of 2.6 to 15 Pa;
2) The copper-clad laminate according to 1), wherein the liquid crystal polymer film after being subject to plasma treatment has a surface roughness of 0.15 µm or less in terms of arithmetic mean roughness Ra and 0.20 µm or less in terms of root-mean-square roughness Rq;
3) The copper-clad laminate according to 1) or 2), wherein the transmission loss per unit length is 20 dB/m or less at 5 GHz;
4) The copper-clad laminate according to 1) or 2), wherein the transmission loss per unit length is 50 dB/m or less at 20 GHz; and
5) The copper-clad laminate according to 1) or 2), wherein the transmission loss per unit length is 130 dB/m or less at 40 GHz.

The present invention further provides:
6) The copper-clad laminate according to any one of 1) to 5), further comprising a barrier layer between the plasma-treated surface of the liquid crystal polymer film and the metal conductor layer formed by dry plating and/or wet plating;
7) The copper-clad laminate according to 6), wherein the barrier layer is a tie-coat layer of nickel, a nickel alloy, cobalt, a cobalt alloy, chromium, or a chromium alloy; and
8) The copper-clad laminate according to any one of 1) to 7), wherein the metal conductor layer is composed of a sputtered copper layer, and an electroplated copper layer formed on the sputtered layer.

The present invention further provides:
9) A method for manufacturing a copper-clad laminate, comprising subjecting a surface of a liquid crystal polymer film to plasma treatment in an oxygen atmosphere or a nitrogen atmosphere at a gas pressure of 2.6 to 15 Pa, and then forming a metal conductor layer by dry plating and/or wet plating;
10) The method for manufacturing a copper-clad laminate according to 9), wherein the liquid crystal polymer film treated with plasma has a surface roughness of 0.15 µm or less in terms of arithmetic mean roughness Ra and 0.20 µm or less in terms of root-mean-square roughness Rq;
11) The method for manufacturing a copper-clad laminate according to 9) or 10), wherein the copper-clad laminate has a transmission loss per unit length of 20 dB/m or less at 5 GHz; and
12) The method for manufacturing a copper-clad laminate according to 9) or 10), wherein the copper-clad laminate has a transmission loss per unit length of 50 dB/m or less at 20 GHz.

The present invention further provides:
13) The method for manufacturing a copper-clad laminate according to 9) or 10), wherein the copper-clad laminate has a transmission loss per unit length of 130 dB/m or less at 40 GHz;
14) The method for manufacturing a copper-clad laminate according to any one of 9) to 13), wherein a barrier layer is formed between the plasma-treated surface of the liquid crystal polymer film and the metal conductor layer formed by dry plating and/or wet plating;
15) The method for manufacturing a copper-clad laminate according to 14), wherein a tie-coat layer of nickel, a nickel alloy, cobalt, a cobalt alloy, chromium, or a chromium alloy is formed as a barrier layer; and
16) The method for manufacturing a copper-clad laminate according to any one of 9) to 15), wherein the formation of a metal conductor layer is performed by forming a sputtered copper layer in advance and then forming an electroplated copper layer on the sputtered layer.

### ADVANTAGEOUS EFFECTS OF INVENTION

A surface of a liquid crystal polymer film of the present invention is treated with plasma in an oxygen atmosphere or a nitrogen atmosphere at a gas pressure of 2.6 to 15 Pa, and then a metal conductor layer is formed by dry plating and/or wet plating. As a result, the chemical adhesion is strengthened by the plasma treatment while the interface roughness between the liquid crystal polymer and the metal conductor layer being maintained to be substantially equal to the original film roughness. Thus, the present invention has an excellent effect of providing a copper-clad laminate of a liquid crystal polymer having excellent high frequency characteristics.

### BRIEF DESCRIPTION OF DRAWINGS

[Fig. 1] This is a schematic view of a copper-clad laminate, as an example of the present invention, having a tie-coat layer, a sputtered copper layer, and an electroplated copper layer on each surface of a liquid crystal polymer film.
[Fig. 2] This is a graph showing a relationship between the power density in the plasma treatment and the peel strength in Examples.
[Fig.3] This is a graph showing the results of transmission loss in Examples and Comparative Examples.

### DESCRIPTION OF EMBODIMENTS

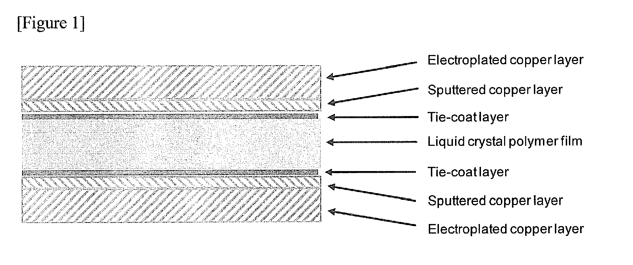

In an example of the liquid crystal polymer film-based copper-clad laminate according to the present invention; both surfaces or one surface of a liquid crystal polymer film such as one shown in Fig. 1 is subject to plasma treatment in an oxygen or nitrogen atmosphere for providing adhesion with a metal conductor layer, and a barrier layer is formed by dry plating, such as a sputtering method and a vapor deposition method, or wet plating, with a metal or metal alloy having a barrier effect.

Subsequently, an electric conductor layer of copper or a copper alloy is stacked on the barrier layer by dry plating such as sputtering and vapor deposition, or formed by wet plating such as electroless copper plating or electrolytic copper plating. Thus, a copper-clad laminate is produced.

Liquid crystal polymers are classified into rheotropic liquid crystal polymers represented by aromatic polyamide and thermotropic liquid crystal polymers represented by aromatic polyester.
The thermotropic liquid crystal polymer having a low hygroscopicity and a low dimensional change rate due to moisture absorption is preferred for the copper-clad laminate. In thermoplastic resins, the thermotropic liquid crystal polymer is inferior to polyimide and aromatic polyimide in heat resistance, but is classified in super engineering plastics excellent in heat resistance.

The thermotropic liquid crystal polymer is formed into a film by an extrusion method, but on an industrial scale, for example, a T-die method or an inflation method is employed.
Examples of the thermotropic liquid crystal polymer film used in the present invention include, but not limited to, those composed of p-hydroxybenzoic acid and polyethylene terephthalate, those composed of p-hydroxybenzoic acid, terephthalic acid, and 4,4'-dihydroxybiphenyl, and those composed of p-hydroxybenzoic acid and 2,6-hydroxynaphthoic acid. These polymers are commercially available, and such polymers can be used.

Commercially available examples of the liquid crystal polymer film include films available from Kuraray Co., Ltd. such as Vecstar series CT-Z, CT-F, FB, and OC and films available from Japan Gore-Tex Inc. such as BIAC series BA and BC.

As described above, the liquid crystal polymer film is subject to plasma treatment for enhancing adhesion with the metal conductor layer. This plasma treatment is not intended to provide an anchor effect through an increase in surface roughness. It is important to provide the adhesion in a degree of hardly changing the surface roughness by strengthening the chemical bond between a polymer and a metal.

The present invention is not characterized by introduction of oxygen into the liquid crystal polymer film. In the plasma treatment with an oxygen gas, radicals act on the polymer surface, and enhancement of the adhesion between the activated polymer surface and a metal can be expected; whereas in the plasma treatment with a nitrogen gas, nitrogen, which is not present in the original liquid crystal polymer film, is introduced into the film, and formation of a new bond between the polymer and a metal can be expected.
The increase in surface roughness shows a negative effect on the transmission loss in a high frequency range. A reduction in surface roughness is therefore desirable for providing intended high frequency characteristics to a copper-clad laminate including a liquid crystal polymer.

Though the oxygen gas described in the Patent Document 1 or 2 may be used in the plasma treatment, the adhesion between a polymer and a metal can also be enhanced by plasma treatment in a nitrogen gas atmosphere.
A low plasma gas pressure makes the plasma discharge unstable, resulting in impossible treatment. In contrast, a high plasma gas pressure makes the plasma discharge stable, but increases gas leakage, resulting in waste of the gas. Therefore, an unreasonably high gas pressure is useless and uneconomic. Accordingly, the gas pressure is desirably 2.6 to 15 Pa.

The tie-coat layer shown in Fig. 1 corresponds to the barrier layer and is preferably made of a metal such as nickel, cobalt or chromium, a nickel alloy, a cobalt alloy, or a chromium alloy showing a barrier effect. These metals and alloys have smaller electrical conductivities than that of copper of the conductor layer and allow a current to flow the surface by a skin effect in a high frequency range. Thus, the tie-coat layer serves as a resistive layer.

Accordingly, from the viewpoint of the high frequency characteristics, it is better not to provide a tie-coat layer. In a copper-clad laminate for a printed board, however, if the barrier layer such as a tie-coat layer is not provided, copper diffuses to the polymer side in the long term, which may cause an effect of cleaving the bond, in some cases.
Therefore, in actuality, a tie-coat layer of a metal or alloy having a high electrical conductivity is desirably formed so as to have a thickness as small as possible. However, the tie-coat layer does not require to be provided in some cases where it is deemed unnecessary according to conditions for using the device.
The tie-coat layer can be formed by, for example, sputtering, vapor deposition, or electroless plating. In a series of processes from the plasma treatment, sputtering in the chamber where the plasma treatment is performed is advantageous in light of production efficiency.

After the formation of the tie-coat layer, a metal conductor layer through which an electric current primarily flows is formed. It is possible to form a copper layer by sputtering in a series of dry processes.
However, if the intended thickness of the copper layer is larger than 1 µm, sputtering is disadvantageous from a cost point of view for forming the metal conductor layer so as to have a predetermined copper thickness. In such a case, it is preferable to form a copper seed layer having a thickness of several hundred nanometers by sputtering on the tie-coat layer and then plating copper thereon by wet plating so as to give a predetermined copper thickness.

The surface roughness of a liquid crystal polymer film can be adjusted to an arithmetic mean roughness Ra of 0.15 µm or less and a root-mean-square roughness Rq of 0.20 µm or less by treating the liquid crystal polymer film with plasma. Thus, it would be understood that the essential purpose of the plasma treatment is not to roughen the surface of the liquid crystal polymer film.
In order to provide adhesion to the copper layer, however, the surface of the liquid crystal polymer film must have an arithmetic mean roughness Ra of 0.05 µm or more and preferably 0.1 µm or more.
The above-described treatment can reduce the transmission loss per unit length of the copper-clad laminate to 20 dB/m or less at 5 GHz, 50 dB/m or less at 20 GHz, and 130 dB/m or less at 40 GHz.

### [Examples]

The present invention will now be described based on Examples and Comparative Examples. The description below is for easy understanding and does not limit the essence of the present invention. In other words, the present invention encompasses various modifications and variations.

### (Examples 1 to 8)

BIAC, BC having a thickness of 50 µm manufactured by Japan Gore-Tex Inc. and Vecstar, CT-Z having a thickness of 50 µm manufactured by Kuraray Co., Ltd. were used as the liquid crystal polymer films.
These liquid crystal polymer films were subject to plasma treatment under conditions of gaseous species, gas pressure, and power density shown in Table 1. The plasma strength is expressed by power density. Since the process conditions, such as intended size, current-voltage characteristics, and processing speed, are different in each apparatus, a plasma strength flatly defined by the applied voltage and the treatment time is meaningless. Accordingly, the plasma strength is expressed by assuming the condition for treating a polyimide film with plasma is a power density of 1.

**[Table 1]**

| | Film | Plasma conditions | | | Film surface roughness | | Tie-coat layer | | Peel strength | Transmission loss (dB/m) | | |
|---|---|---|---|---|---|---|---|---|---|---|---|---|
| | | Gas pressure (Pa) | Gaseous species | Power density | Ra (µm) | Rq (µm) | Type | Thickness (nm) | (kN/m) | 5GHz | 20GHz | 40GHz |
| | | | | | | | | | | | | |
| Example 1 | BIAC | 13 | Nitrogen | 4.3 | 0.11 | 0.14 | None | - | 0.9 | 14 | 36 | 76 |
| Example 2 | BIAC | 13 | Nitrogen | 4.3 | 0.10 | 0.14 | Cr | 3 | 0.9 | 15 | 38 | 92 |
| Example 3 | BIAC | 10 | Nitrogen | 8.1 | 0.12 | 0.15 | Cr | 3 | 0.6 | 15 | 38 | 92 |
| Example 4 | BIAC | 10 | Nitrogen | 8.1 | 0.12 | 0.14 | Cr | 7 | 0.7 | 16 | 40 | 110 |
| Example 5 | BIAC | 10 | Nitrogen | 8.1 | 0.11 | 0.15 | NiCr | 3 | 0.8 | 17 | 43 | 124 |
| Example 6 | BIAC | 10 | Oxygen | 5.3 | 0.12 | 0.15 | NiCr | 3 | 0.6 | 17 | 43 | 124 |
| Example 7 | Vecstar | 10 | Oxygen | 5.3 | 0.11 | 0.14 | NiCr | 3 | 0.5 | 18 | 45 | 128 |
| Example 8 | Vecstar | 10 | Nitrogen | 5.3 | 0.10 | 0.14 | NiCr | 3 | 0.5 | 18 | 45 | 128 |
| | | | | | | | | | | | | |
| Comparative Example 1 | Kapton | 10 | Oxygen | 1 | 0.04 | 0.06 | NiCr | 3 | 1.0 | 27 | 65 | - |
| Comparative Example 2 | BIAC | Rolled copper foil | | | 0.18 | 0.23 | - | - | 0.3 | 18 | 48 | 137 |
| Comparative Example 3 | BIAC | 10 | Nitrogen | 0 | 0.11 | 0.15 | NiCr | 3 | 0 | - | - | - |
| Comparative Example 4 | BIAC | 10 | Nitrogen | 1 | 0.11 | 0.14 | NiCr | 3 | 0.1 | - | - | - |
| Comparative Example 5 | BIAC | 2 | Oxygen | 5.3 | 0.11 | 0.14 | - | - | - | - | - | - |

In Example 1, the liquid crystal polymer film was the above BIAC, and the plasma conditions were as follows. Gas pressure: 13 Pa; gaseous species: nitrogen; and power density: 4.3.
In Example 2, the liquid crystal polymer film was the above BIAC, and the plasma conditions were as follows. Gas pressure: 13 Pa; gaseous species: nitrogen; and power density: 4.3.
In Example 3, the liquid crystal polymer film was the above BIAC, and the plasma conditions were as follows. Gas pressure: 10 Pa; gaseous species: nitrogen; and power density: 8.1.
In Example 4, the liquid crystal polymer film was the above BIAC, and the plasma conditions were as follows. Gas pressure: 10 Pa; gaseous species: nitrogen; and power density: 8.1.

In Example 5, the liquid crystal polymer film was the above BIAC, and the plasma conditions were as follows. Gas pressure: 10 Pa; gaseous species: nitrogen; and power density: 8.1.
In Example 6, the liquid crystal polymer film was the above BIAC, and the plasma conditions were as follows. Gas pressure: 10 Pa; gaseous species: oxygen; and power density: 5.3.
In Example 7, the liquid crystal polymer film was the above Vecstar, and the plasma conditions were as follows. Gas pressure: 10 Pa; gaseous species: oxygen; and power density: 5.3.
In Example 8, the liquid crystal polymer film was the above Vecstar, and the plasma conditions were as follows. Gas pressure: 10 Pa; gaseous species: nitrogen; and power density: 5.3.

For the surface profile of the liquid crystal polymer film treated with plasma, the surface roughness in a visual field of 120 µm × 92 µm was measured with a surface profiler Wyko NT1100 manufactured by Veeco Instruments Inc. to obtain the arithmetic mean roughness Ra and the root-mean-square roughness Rq.
The arithmetic mean roughnesses Ra and the root-mean-square roughnesses Rq in Examples 1 to 8 were as follows. The results are also listed in Table 1.

Example 1: Ra: 0.11 µm; Rq: 0.14 µm
Example 2: Ra: 0.10 µm; Rq: 0.14 µm
Example 3: Ra: 0.12 µm; Rq: 0.15 µm
Example 4: Ra: 0.12 µm; Rq: 0.14 µm
Example 5: Ra: 0.11 µm; Rq: 0.15 µm
Example 6: Ra: 0.12 µm; Rq: 0.15 µm
Example 7: Ra: 0.11 µm; Rq: 0.14 µm
Example 8: Ra: 0.10 µm; Rq: 0.14 µm

After plasma treatment of the film, a tie-coat layer shown in Table 1 and a sputtered copper layer of 200 nm as a seed layer of wet plating were formed by sputtering. The conditions of the tie-coat layers in Examples 1 to 8 were as follows. The results are also listed in Table 1.

Example 1: tie-coat layer: none; thickness: -
Example 2: type and thickness of the tie-coat layer; type: Cr, thickness: 3 nm
Example 3: type and thickness of the tie-coat layer; type: Cr, thickness: 3 nm
Example 4: type and thickness of the tie-coat layer; type: Cr, thickness: 7 nm
Example 5: type and thickness of the tie-coat layer; type: NiCr, thickness: 3 nm
Example 6: type and thickness of the tie-coat layer; type: NiCr, thickness: 3 nm
Example 7: type and thickness of the tie-coat layer; type: NiCr, thickness: 3 nm
Example 8: type and thickness of the tie-coat layer; type: NiCr, thickness: 3 nm

Subsequently, a copper layer was grown on the sputtered copper layer up to a thickness of 18 µm by electroplating to prepare a sample. In prior to the measurement of transmission loss, both surfaces of a liquid crystal polymer film were subject to plasma treatment, a tie-coat layer and a sputtered copper layer were formed thereon, and electrolytic copper plating were performed thereto. The schematic view of a copper-clad laminate shown in Fig. 1 illustrates the structure of these Examples.

In order to evaluate the adhesion of the sample of each Example, the peel strength was measured. In measuring the peel strength, a pattern having a width of 3 mm is formed from a copper chloride etching solution, and a bond tester 4000 manufactured by Dage Arctek Co., Ltd. is used to measure the peel strength.
The peel strengths in Examples 1 to 8 were as follows. The results are also listed in Table 1.

Example 1: 0.9 kN/m
Example 2: 0.9 kN/m
Example 3: 0.6 kN/m
Example 4: 0.7 kN/m
Example 5: 0.8 kN/m
Example 6: 0.6 kN/m
Example 7: 0.5 kN/m
Example 8: 0.5 kN/m

The transmission loss was evaluated at each frequency by forming a microstrip line with a characteristic impedance of 50 Ω and measuring the transmission coefficient with a network analyzer HP8510C manufactured by Hewlett Packard Ltd. The copper layer having a thickness of 12 µm formed by electroplating was used for the measurement. The measurement results of transmission loss in Examples 1 to 8 were as follows. The results are also listed in Table 1.

Example 1: 5 GHz: 14 dB/m; 20 GHz: 36 dB/m; 40 GHz: 76 dB/m
Example 2: 5 GHz: 15 dB/m; 20 GHz: 38 dB/m; 40 GHz: 92 dB/m
Example 3: 5 GHz: 15 dB/m; 20 GHz: 38 dB/m; 40 GHz: 92 dB/m
Example 4: 5 GHz: 16 dB/m; 20 GHz: 40 dB/m; 40 GHz: 110 dB/m
Example 5: 5 GHz: 17 dB/m; 20 GHz: 43 dB/m; 40 GHz: 124 dB/m
Example 6: 5 GHz: 17 dB/m; 20 GHz: 43 dB/m; 40 GHz: 124 dB/m
Example 7: 5 GHz: 18 dB/m; 20 GHz: 45 dB/m; 40 GHz: 128 dB/m
Example 8: 5 GHz: 18 dB/m; 20 GHz: 45 dB/m; 40 GHz: 128 dB/m

The copper-clad laminates in Examples 1 to 8 have little difference in film surface roughness even after treatment under various plasma conditions. The peel strength is 0.5 kN/m or more even at an arithmetic mean roughness Ra of 0.15 µm or less and a root-mean-square roughness Rq of 0.20 µm or less, and is a level having no problem in practical use.

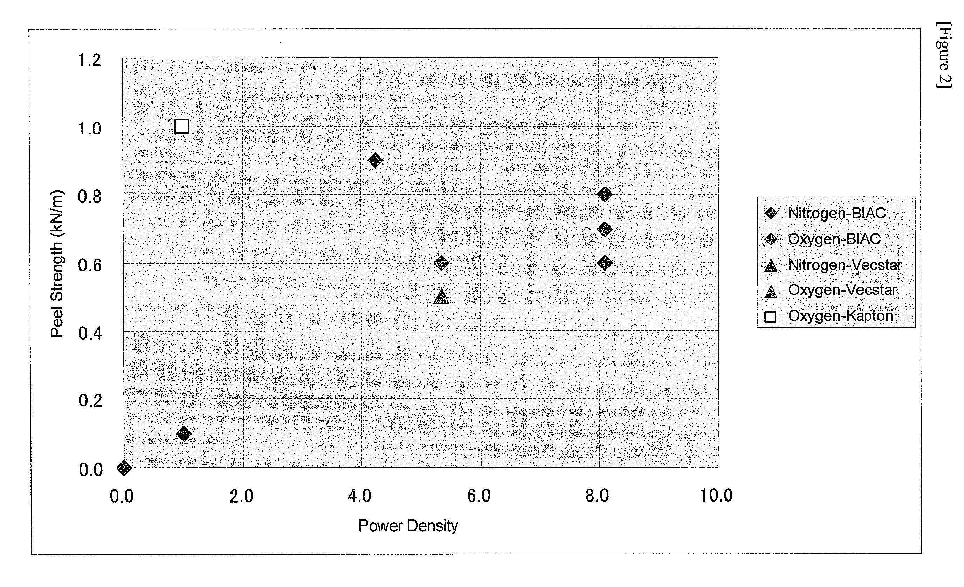

Fig. 2 shows a relationship between the power density in the plasma treatment and the peel strength. As described above, the power density herein is defined such that the power density for treating an ordinary polyimide film is 1, and a power density of higher than 1 was applied to the liquid crystal polymer film in each Example. The peel strength tends to increase with a rise in power density.

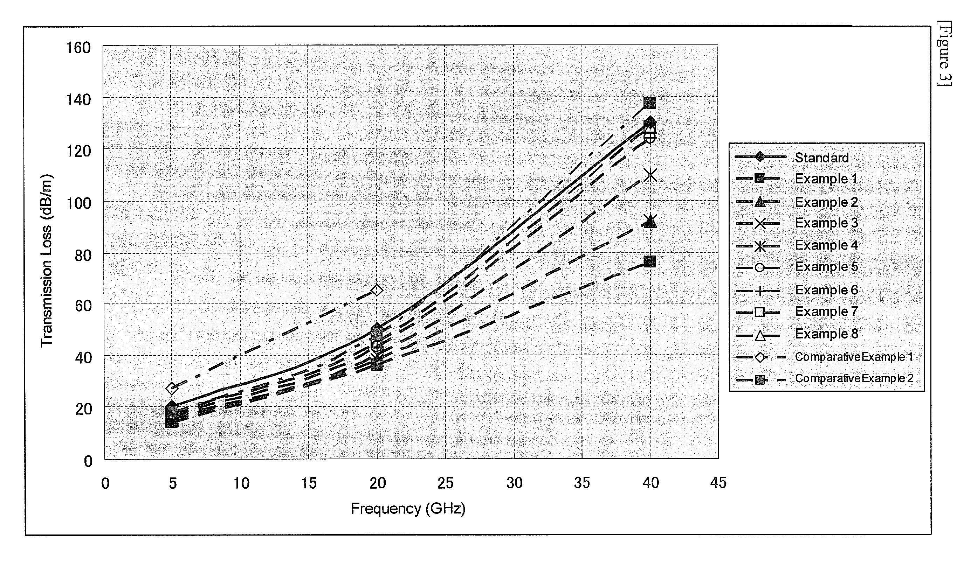

Fig. 3 shows the results of transmission loss. The results in Examples demonstrate that the transmission loss decreases with decreasing the thickness of the tie-coat when the composition is the same and decreases with an increase in electrical conductivity of the tie-coat composition when the thickness is the same. Since the difference in surface roughness is small, the descriptions for the relationship between the transmission loss and the film surface roughness are omitted.

Comparative Examples will now be described.

### (Comparative Example 1)

A copper-clad laminate was produced in the same manner as in Example 6 except that a polyimide film, Kapton E having a thickness of 50 µm manufactured by DuPont was used as the film and that the power density of plasma was altered.

As shown in Table 1 and Fig. 2, in the case of using the polyimide film, even though the surface roughness (Ra: 0.04 µm, Rq: 0.06 µm) was smaller than that of the liquid crystal polymer, a high peel strength (1.0 kN/m) was obtained. However, the transmission loss (5 GHz: 27 dB/m, 65 GHz: 45 dB/m, 40 GHz: -) was larger than that of the liquid crystal polymer, hence, the results were bad.

### (Comparative Example 2)

In the case of using a liquid crystal polymer in a copper-clad laminate, thermal lamination is generally employed. Comparative Example 2 shows the results of a case of using rolled copper foil (BHY having a thickness of 12 µm, manufactured by JX Nippon Mining & Metals Corporation) as the copper-clad laminate that was produced by thermal lamination using BIAC as the liquid crystal polymer.
In the thermal lamination of rolled copper foil, the surface profile of the rolled copper foil is reflected to the surface roughness of the film. As a result, as shown in Table 1, the surface roughness was large as having a Ra of 0.18 µm and a Rq of 0.23 µm.

In thermal lamination in which copper foil itself was laminated to a liquid crystal polymer film without treating the film with plasma as in Comparative Example 2, the main factor associated with adhesion was the anchor effect in which the roughened copper foil makes inroads into the softened film, and high adhesion was not provided. The peel strength was 0.3 kN/m, which was inferior to the results in Examples.
In addition, the transmission loss was also large as having 5 GHz: 18 dB/m, 20 GHz: 48 dB/m, 40 GHz: 137 dB/m, due to the large surface roughness compared to those in Examples. Thus, the copper-clad laminate including the liquid crystal polymer in Comparative Example 2 could not achieve the purpose of the present invention.

### (Comparative Example 3)

A copper-clad laminate was produced in the same manner as in Example 5 except that the liquid crystal polymer film was allowed to pass through a treatment gas (nitrogen) without a power being applied during the plasma treatment. In the measurement of peel strength, a tie-coat layer and a sputtered copper layer were formed on a liquid crystal polymer not treated with plasma, and then electroplating was tried for growth of the copper layer. However, the adhesion between the liquid crystal polymer and the metal conductor layer was insufficient (peel strength: 0 kN/m), and as a result, the electroplating could not be performed.

### (Comparative Example 4)

A copper-clad laminate was produced in the same manner as in Comparative Example 3 using BIAC as the liquid crystal polymer except that the power density in the plasma treatment was the same as that in Comparative Example 1 using a polyimide.
In the same power density as that in the polyimide, the liquid crystal polymer was not sufficiently activated. Consequently, though a copper layer having a thickness of 18 µm was formed by electroplating, as shown in Table 1 and Fig. 2, the peel strength was low (peel strength: 0.1 kN/m).
The results demonstrate that in order to impart adhesion to a liquid crystal polymer film by plasma treatment as in Examples, treatment with a higher power density than that in plasma treatment of ordinary polyimide is necessary.

### (Comparative Example 5)

A copper-clad laminate was produced in the same manner as in Example 6 except that the gas pressure in the plasma treatment was 2 Pa as shown in Table 1 (plasma gas: oxygen, power density: 5.3). A low plasma gas pressure made the plasma discharge unstable, resulting in impossibility of treatment. The results are also shown in Table 1.

As shown in Examples and Comparative Examples above, all of Examples 1 to 8 of the present invention can provide copper-clad laminates having a high peel strength and a small transmission loss compared with Comparative Examples 1 to 5.

### INDUSTRIAL APPLICABILITY

The copper-clad laminate of the present invention includes a metal conductor layer formed by dry plating and/or wet plating on a surface of a liquid crystal polymer film which was subject to plasma treatment in an oxygen atmosphere or a nitrogen atmosphere at a gas pressure of 2.6 to 15 Pa. The chemical adhesion is strengthened by the plasma treatment while the interface roughness between the liquid crystal polymer and the metal conductor layer being maintained to be substantially equal to the original film roughness. Thus, the present invention has an excellent effect of providing a copper-clad laminate of a liquid crystal polymer having excellent high frequency characteristics. Accordingly, the copper-clad laminate can be applied to, for example, a high frequency circuit board or a circuit for high-speed transmission line.

## Claims

1. A copper-clad laminate comprising a metal conductor layer formed by dry plating and/or wet plating on a surface obtained by subjecting a surface of a liquid crystal polymer film to plasma treatment in an oxygen atmosphere or a nitrogen atmosphere at a gas pressure of 2.6 to 15 Pa.

2. The copper-clad laminate according to Claim 1, wherein the liquid crystal polymer film after being subject to plasma treatment has a surface roughness of 0.15 µm or less in terms of arithmetic mean roughness Ra and 0.20 µm or less in terms of root-mean-square roughness Rq.

3. The copper-clad laminate according to Claim 1 or Claim 2, wherein the transmission loss per unit length is 20 dB/m or less at 5 GHz.

4. The copper-clad laminate according to Claim 1 or Claim 2, wherein the transmission loss per unit length is 50 dB/m or less at 20 GHz.

5. The copper-clad laminate according to Claim 1 or Claim 2, wherein the transmission loss per unit length is 130 dB/m or less at 40 GHz.

6. The copper-clad laminate according to any one of Claims 1 to 5, further comprising a barrier layer between the plasma-treated surface of the liquid crystal polymer film and the metal conductor layer formed by dry plating and/or wet plating.

7. The copper-clad laminate according to Claim 6, wherein the barrier layer is a tie-coat layer of nickel, a nickel alloy, cobalt, a cobalt alloy, chromium, or a chromium alloy.

8. The copper-clad laminate according to any one of Claims 1 to 7, wherein the metal conductor layer is composed of a sputtered copper layer, and an electroplated copper layer formed on the sputtered layer.

9. A method for manufacturing a copper-clad laminate, comprising: subjecting a surface of a liquid crystal polymer film to plasma treatment in an oxygen atmosphere or a nitrogen atmosphere at a gas pressure of 2.6 to 15 Pa; and then forming a metal conductor layer by dry plating and/or wet plating.

10. The method for manufacturing a copper-clad laminate according to Claim 9, wherein the liquid crystal polymer film treated with plasma has a surface roughness of 0.15 µm or less in terms of arithmetic mean roughness Ra and 0.20 µm or less in terms of root-mean-square roughness Rq.

11. The method for manufacturing a copper-clad laminate according to Claim 9 or Claim 10, wherein the copper-clad laminate has a transmission loss per unit length of 20 dB/m or less at 5 GHz.

12. The method for manufacturing a copper-clad laminate according to Claim 9 or Claim 10, wherein the copper-clad laminate has a transmission loss per unit length of 50 dB/m or less at 20 GHz.

13. The method for manufacturing a copper-clad laminate according to Claim 9 or Claim 10, wherein the copper-clad laminate has a transmission loss per unit length of 130 dB/m or less at 40 GHz.

14. The method for manufacturing a copper-clad laminate according to any one of Claims 9 to 13, wherein a barrier layer is formed between the plasma-treated surface of the liquid crystal polymer film and the metal conductor layer formed by dry plating and/or wet plating.

15. The method for manufacturing a copper-clad laminate according to Claim 14, wherein a tie-coat layer of nickel, a nickel alloy, cobalt, a cobalt alloy, chromium, or a chromium alloy is formed as a barrier layer.

16. The method for manufacturing a copper-clad laminate according to any one of Claims 9 to 15, wherein the formation of a metal conductor layer is performed by forming a sputtered copper layer in advance and then forming an electroplated copper layer on the sputtered layer.
